# EUROPEAN PATENT SPECIFICATION

(11) **EP 3 018 394 B1**
(45) Date of publication and mention of the grant of the patent: **13.12.2017**
(21) Application number: 14820408.4
(22) Date of filing: 03.06.2014
(51) Int. Cl.: F16L 27/02

(54) **UNIVERSAL ROTARY PIPE CONNECTOR**
UNIVERSELLER ROTIERENDER ROHRVERBINDER
RACCORD DE TUYAUX ROTATIF UNIVERSEL

(30) Priority: 05.07.2013 CN 201320402375 U
(43) Date of publication of application: 11.05.2016
(73) Proprietor: Jiangsu Hippo Plastics Co., Ltd, Changzhou, Jiangsu 213161 (CN)
(72) Inventor: ZHOU, Baixing, Changzhou Jiangsu 213161 (CN); ZHOU, Minhong, Changzhou Jiangsu 213161 (CN); ZHOU, Minwei, Changzhou Jiangsu 213161 (CN); ZHOU, Minfei, Changzhou Jiangsu 213161 (CN)
(74) Representative: Schorr, Peter Karl
(86) International application number: PCT/CN2014/079070
(87) International publication number: WO 2015/000345

(56) References cited:
- EP-A1- 1 243 834
- AU-A- 2 502 099
- CN-A- 103 322 352
- CN-U- 203 322 573
- DE-A1- 4 314 675
- JP-A- H0 828 765
- JP-A- H0 828 765
- JP-A- H07 145 889
- JP-A- 2002 257 277
- JP-A- 2002 257 277
- JP-A- 2005 299 827
- US-A1- 2006 012 166

## Description

### TECHNICAL FIELD OF THE INVENTION

This invention relates to pipeline equipment, and more particularly, to a universal pipe joint according to the preamble of claim 1.

### BACKGROUND

The quality and duration of the pipelines are not only dependent on the quality and duration of pipes, but also on the quality of the connection between pipes. The connection between two pipes is accomplished by a pipe joint. During pipeline construction, the center axes of two pipes to be connected are often neither in a straight line nor in a same height. Thus, various type of pipe joints, e.g. a straight joint, an elbow joint, a three-way joint, or a bridge joint must be employed for pipelines with different deployment. However, like the elbow joint, its curvature is determined, so that the relative positions of the two pipes disposed at two ends of the elbow joint are determined, too. In practice, the arrangement of the pipelines are complex, the relative positions of the pipes are often not in conformity to the specifications of the pipeline joints; and the types of the pipeline joints are too limited to meet all kinds of requirements for pipeline connection. It is easy to understood, using conventional pipe joints will cause a more or less deviation of the pipes, and the pipes will warp, such that the quality and duration of the pipelines are adversely affected.

A universal pipe joint according to the preamble of claim 1 is known by US 2006/0012166 A1 and EP 1 243 834 A1.

In a Chinese patent application with a publication No. CN2711497Y and a publication date on July 20, 2005, it is disclosed a universal pipe joint including an upper joint section and a lower joint section. An upper connecting ring is disposed at the outer perimeter of the lower end of the upper joint section, and a lower connecting ring is disposed at the outer perimeter of the upper end of the lower joint section. The upper joint section and the lower joint section are combined and communicated via the upper connecting ring and the lower connecting ring. The upper joint section and the lower joint section can rotate relative to each other. An included angle α is formed between the plane of the upper connecting ring and the center line of the upper joint section, and another included angle β is formed between the plane of the lower connecting ring and the center line of the lower joint section. The included angle α is complementary to the included angle β. The technical solution divides a pipeline joint into the upper joint section and the lower joint section. The included angle formed between the two center lines of the two joint sections is between 0 and 2α; and as long as the included angle formed between the two center lines of the two pipes varies between 0 and 2α, the pipelines can be connected by the universal pipeline joint rapidly and conveniently. However, its disclosed technical solution has disadvantages. Although the publication recites that the upper joint section and the lower joint section are combined together and rotatable relative to each other, no embodiment is provided for illustration. In addition, the sealability and stability of the connection of the upper joint section and the lower joint section, as well as the freedom to adjust the included angle are all determined by the connection mode; therefore, without an illustration of such a connection mode, the technical solution in CN2711497Y is uncompleted, and thus cannot solve the technical problems as expected or reach the desired technical effect.

### SUMMARY

In view of the above-described problems that the current pipe joints are not suitable to the complex pipeline connections, one objective of this invention is to provide a universal pipe joint that comprises a connection mechanism disposed between a first connector and a second connector, so that the included angle formed between the center axis of the second connector and the center axis of the first connector can be adjusted within a certain scope to solve the problems..

To achieve the above objective, in one aspect of this invention, it is provided a universal pipe joint comprising a first connector, a second connector, and a connection mechanism. The connection mechanism comprises an annular boss and a ring buckle which is buckled to the annular boss. The ring buckle is adapted to spin relative to the annular boss around its own center axis. The annular boss is in a fixed connection to the second connector; a first included angle is formed between the center axis of the annular boss and the center axis of the second connector. The ring buckle is in a fixed connection to the first connector; and a second included angle is formed between the center axis of the ring buckle and the center axis of the first connector.

The annular boss comprises an annular flange, and the ring buckle comprises a plurality of arc barbs for clamping the annular flange. The arc barbs are circumferentially distributed on the end of the ring buckle at intervals. The intervals among the arc barbs provide space for the annular boss and the ring buckle to mutually squeeze when the annular boss and the ring buckle are fastened. The fastening is smooth and can be achieved manually, which facilitates the operation on the spot. Because the arc barbs are not subject to the outward radial force, it is unable to detach once the arc barbs lock the annular flange.
The outer wall of the second connector comprises an annular chime, the chime is in the vicinity of the barbs, and an outer diameter of the chime is slightly greater than or equal to the outer diameter of the ring buckle. The chime protects the arc barbs, and also prevents the impurities from entering the connection mechanism.

Supposing that the first included angle is α, and the second included angle is β. If α is smaller than β, the included angle between the center axis of the second connector and the center axis of the first connector varies freely between (α+β) and (β-α). If α is greater than β, the included angle between the center axis of the second connector and the center axis of the first connector varies freely between (α+β) and (α-β).

If the first included angle is equal to the second included angle, that is, α = β, the included angle between the center axis of the second connector and the center axis of the first connector varies between 0 and 2α. When the included angle between the center axis of the second connector and the center axis of the first connector is 0, the universal pipe joint is a straight joint.

For the firm fastening between the annular boss and the ring buckle, the dimension of the ring buckle should be designed to match the annular boss, so that it's difficult for the arc barbs to detach from the annular flange. However, such design narrows the space for locking the ring buckle and the annual boss, and thus a tool or machine is required to produce strong extruding force, which causes inconvenience for the site mounting.

The universal pipe joint further comprises a seal ring. The outer side of the annular boss is a main contact surface, which ring buckle contact with and slides on. An annular groove for receiving the seal ring is disposed at the outer side of the annular boss. The seal ring is located in the annular groove and has good sealability.

Preferably, the annular boss and the second connector are formed integrally, and the ring buckle and the first connector are formed integrally.

For practical pipelines mounting requirement, the first included angle is between 10 and 45 degrees, and the second included angle is between 10 and 45 degrees.

The greater is the number of the arc barbs, the smaller is the space therebetween, and the bigger is the required squeezing force for buckling. If the number of the arc barbs is too small or the space between the arc barbs is too large, the buckling force will be insufficient; and thus the arc barbs tend to detach. Preferably, the arc barbs are four in number and their radian are all 45°, and are equidistantly distributed on the end of the ring buckle in the circumferential direction.

In operation, to accurately control the relative position of the first connector and the second connector, the outer wall of the ring buckle is provided with a graduated scale to indicate a rotation angle of the first connector or the second connector.

In particularly, the first connector is a socket-typed connector, and the second connector is a plug-typed connector.

It is advantageous in this type of universal pipe joint that the first connector or the second connector is adapted to rotate freely, so that the included angle formed between the center axes of the first connector and the second connector can be adjusted, which facilitates the connection of pipes having different included angles. The universal pipe joint is easy to buckle and difficult to detach, and has good sealability, and reliable and stable buckling; and the connection mechanism of the universal pipe joint has high rotational freedom. As a result, the universal pipe joint can be widely applied and conveniently used, simple to operate, and easy to mount.

### BRIEF DESCRIPTION OF THE DRAWINGS

The invention is described hereinbelow with reference to the accompanying drawings, in which:
FIG. 1 is an axial sectional view of a universal pipe joint of this invention.
FIG. 2 is an enlarged view of part A in FIG. 1.
FIG. 3 is a schematic diagram of a universal pipe joint in accordance with one preferable embodiment of this invention.

In the FIGS.: 1. First connector; 2. Second connector; 3. Annular boss; 4. Ring buckle ; 5. First included angle; 6. Second included angle; 7. Annular flange; 8. Arc barbs; 9. Seal ring; 10. Annual groove; 11. Annual chime; 12. Graduated scale.

### DETAILED DESCRIPTION OF THE EMBODIMENTS

For further illustrating the invention, detailed embodiments are described below. It should be noted that the following embodiments are intended to illustrate and not to limit the invention.

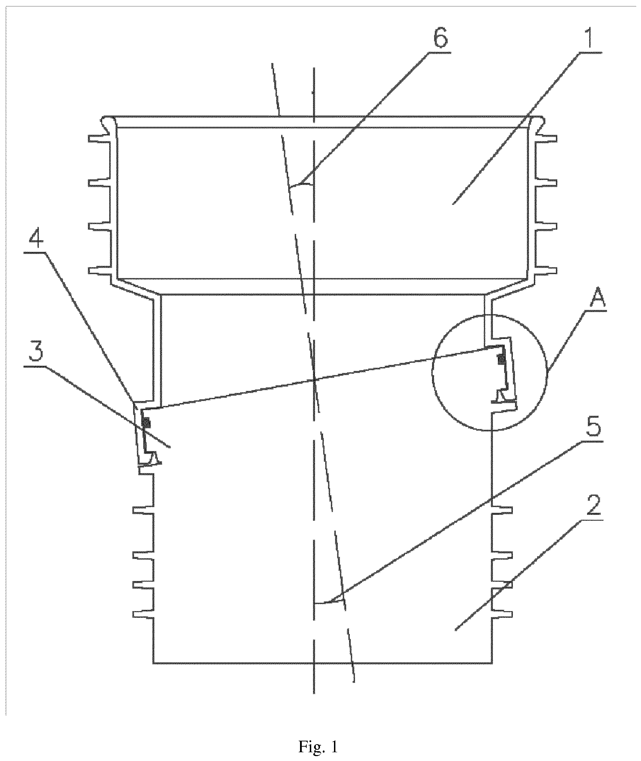

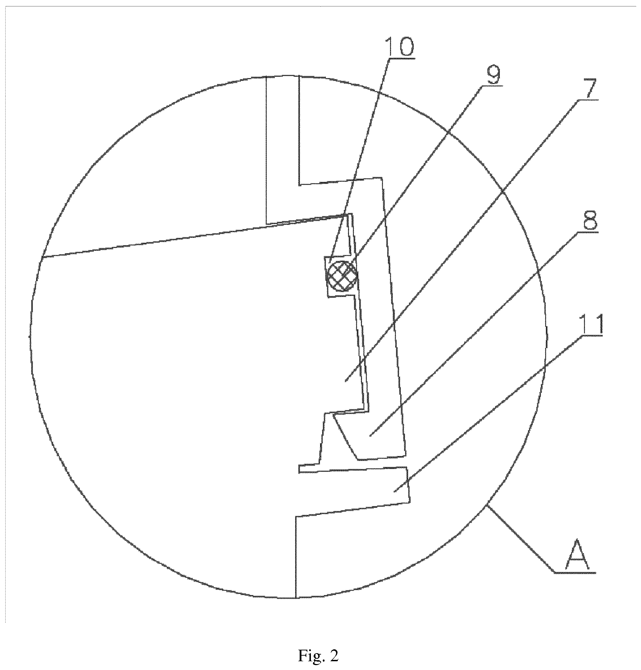

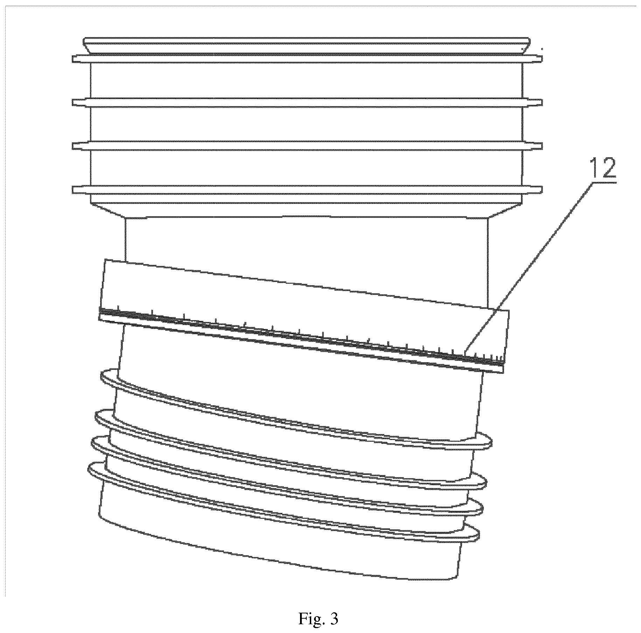

As shown in FIGS. 1-2, the invention provides a universal pipe joint comprising a socket-typed connector 1, a plug-typed connector 2, and a connection mechanism. The connection mechanism comprises an annular boss 3 and a ring buckle 4 which is buckled to the annular boss 3. The ring buckle 4 is adapted to spin relative to the annular boss 3 around its own center axis The annular boss 3 and the plug-typed connector 2 are formed integrally. A first included angle 5 is formed between the center axis of the annular boss 3 and the center axis of the plug-typed connector 2. The ring buckle 4 and the socket-typed connector 1 are formed integrally. A second included angle 6 is formed between the center axis of the ring buckle 4 and the center axis of the socket-typed connector 1. Supposing the first included angle 5 is α, and the second included angle 6 is β, the first included angle 5 is equal to the second included angle 6, that is, α = β = 35°, then the included angle between the center axis of the plug-typed connector 2 and the center axis of the socket-typed connector 1 varies between 0 and 70°. When the included angle between the center axis of the plug-typed connector 2 and the center axis of the socket-typed connector 1 is 0, the universal pipe joint is a straight joint. The annular boss 3 comprises an annular flange 7, the ring buckle 4 comprises four arc barbs 8 for clamping the annular flange 7, and the radian of the four arc barbs are all 45° and equidistantly distributed on the end of the ring buckle 4 in a circumferential direction. The intervals between the arc barbs 8 provide space for the annular boss 3 and the ring buckle 4 to mutually squeeze when the annular boss 3 and the ring buckle 4 are fastened. The fastening is smooth and can be achieved manually, which facilitates the operation on the spot. Because the arc barbs 8 are not subject to the outward radial force, it will not easy to detach once the arc barbs 8 lock the annular flange 7. The universal pipe joint further comprises a seal ring 9. The outer side of the annular boss 3 is a main contact surface, which the ring buckle 4 contact with and slides on. An annular groove 10 for receiving the seal ring 9 is disposed at an outer side of the annular boss 3. The seal ring 9 is located in the annular groove 10 and has good sealability. The outer wall of the plug-typed connector 2 comprises an annular chime 11, the chime 11 is in the vicinity of the barbs 8, and an outer diameter of the chime 11 is slightly greater than or equal to an outer diameter of the ring buckle 4. The chime 11 protects the arc barbs 8 and also prevents the impurities from entering the connection mechanism. As shown in FIG. 3, an outer wall of the ring buckle 4 is provided with a graduated scale 12 to indicate a rotation angle of the socket-typed connector 1 and the plug-typed connector 2.

It should be understood that the above description is intended to be illustrative, and not restrictive. For example, the above-described embodiments (and/or aspects thereof) may be used in combination with each other. In addition, many modifications may be made to embodiments without departing from the of the scope invention in order to adapt a particular situation or material. While the specific components and processes described herein are intended to define the parameters of the various embodiments, they are by no means limiting and are exemplary embodiments. Many other embodiments will be apparent to those of skill in the art upon reviewing the above description. The scope of the invention should, therefore, be determined with reference to the claims, along with the full scope of equivalents to which such claims are entitled. In the claims, the terms "including" is used as the plain-English equivalents of the term "comprising". Moreover, in the specification, the terms "first", "second", and etc., are used merely as labels and are not intended to impose numerical requirements on their objects.

## Claims

1. A universal pipe joint, comprising a first connector (1), a second connector (2), and a connection mechanism, wherein the connection mechanism comprises an annular boss (3) and a ring buckle (4) buckled to the annular boss (3); the ring buckle (4) can spin relative to the annular boss (3) around its own center axis; the annular boss (3) is in a fixed connection to the second connector (2); a first included angle (5) is formed between the center axis of the annular boss (3) and the center axis of the second connector (2); the ring buckle (4) is in a fixed connection to the first connector (1); and a second included angle (6) is formed between the center axis of the ring buckle (4) and the center axis of the first connector (1),wherein the annular boss (3) comprises an annular flange (7), and the ring buckle (4) comprises a plurality of arc barbs (8) for clamping the annular flange (7), and wherein the arc barbs are circumferentially distributed on an end of the ring buckle (4) at intervals, **characterized in that** the outer wall of the second connector (2) comprises an annular chime (11), the annular chime (11) is in the vicinity of the arc barbs (8), and the outer diameter of the chime (11) is slightly greater than or equal to the outer diameter of the ring buckle (4).

2. The universal pipe joint of claim 1, wherein the first included angle (5) is equal to the second included angle (6).

3. The universal pipe joint of claim 1 or 2, further comprising a seal ring (9), wherein an annular groove (10) for receiving the seal ring (9) is disposed at the outer side of the annular boss (3).

4. The universal pipe joint of one of the preceding claims , wherein the annular boss (3) and the second connector (2) are formed integrally, and the ring buckle (4) and the first connector (1) are formed integrally.

5. The universal pipe joint of one of the preceding claims , wherein the first included angle (5) is between 10 and 45 degrees, and the second included angle (6) is between 10 and 45 degrees.

6. The universal pipe joint of one of the preceding claims , wherein the arc barbs (8) are four in number and their radian are all 45°, and they are equidistantly distributed on the end of the ring buckle (4) in the circumferential direction.

7. The universal pipe joint of one of the preceding claims , wherein the outer wall of the ring buckle (4) is provided with a graduated scale (12) to indicate a rotation angle of the first connector (1) or the second connector (2).

8. The universal pipe joint of one of the preceding claims , wherein the first connector (1) is a socket-typed connector and the second connector (2) is a plug-typed connector (2).

## Patentansprüche

1. Ein universelles Rohrgelenk, das eine erste Verbindung (1), eine zweite Verbindung (2) und einen Verbindungsmechanismus umfasst, wobei der Verbindungsmechanismus einen runden Knauf (3) und eine Ringschnalle (4) aufweist, die am runden Knauf (3) befestigt ist; die Ringschnalle (4) kann sich relativ zum runden Knauf (3) um die eigene Mittelachse drehen; der runde Knauf (3) befindet sich in einer festen Verbindung mit der zweiten Verbindung (2); ein erster, eingeschlossener Winkel (5) ist gebildet zwischen dem runden Knauf (3) und der Mittelachse der zweiten Verbindung (2); die Ringschnalle (4) befindet sich in einer festen Verbindung zur ersten Verbindung (1); und ein zweiter eingeschlossener Winkel (6) ist zwischen der Mittelachse der Ringschnalle (4) und der Mittelachse der ersten Verbindung (1) gebildet, wobei der runde Knauf (3) einen runden Flansch (7) umfasst und die Ringschnalle (4) mehrere gebogene Widerhaken (8) umfasst, um den runden Flansch (7) zusammenzuklemmen, und wobei die gebogenen Widerhaken umlaufend in Abständen an einem Ende der Ringschnalle (4) verteilt sind, **dadurch gekennzeichnet, dass** die äußere Wand der zweiten Verbindung (2) eine runde Glocke (11) umfasst, die runde Glocke (11) sich in der Nähe der gebogenen Widerhaken (8) befindet und der Außendurchmesser der Glocke (11) etwas größer oder gleich groß ist, wie der Außendurchmesser der Ringschnalle (4).

2. Das universelle Rohrgelenk nach Anspruchs 1, wobei der erste eingeschlossene Winkel (5) dem zweiten eingeschlossenen Winkel (6) entspricht.

3. Das universelle Rohrgelenk nach Anspruch 1 oder 2, aufweisend einen Dichtring (9), wobei eine runde Nut (10), die den Dichtring (9) aufnimmt, auf der Außenseite des runden Knaufs (3) angeordnet ist.

4. Das universelle Rohrgelenk nach einem der vorhergehenden Ansprüche, wobei der runde Knauf (3) und die zweite Verbindung (2) sowie die Ringschnalle (4) und die erste Verbindung (1) einteilig ausgebildet sind.

5. Das universelle Rohrgelenk nach einem der vorhergehenden Ansprüche, wobei der erste eingeschlossene Winkel (5) zwischen 10 und 45 Grad, und der zweite eingeschlossene Winkel (6) zwischen 10 und 45 Grad ist.

6. Das universelle Rohrgelenk nach einem der vorhergehenden Ansprüche, mit vier gebogenen Widerhaken (8), deren Radiant jeweils 45° betragen und die in umlaufender Richtung abstandsgleich zueinander am Ende der Ringschnalle (4) angebracht sind.

7. Das universelle Rohrgelenk nach einem der vorhergehenden Ansprüche, wobei die Außenwand der Ringschnalle (4) über eine abgestufte Skala (12) verfügt, um den Drehungswinkel der ersten Verbindung (1) oder der zweiten Verbindung (2) anzuzeigen.

8. Das universelle Rohrgelenk nach einem der vorhergehenden Ansprüche, wobei die erste Verbindung eine Buchsen-Verbindung und die zweite Verbindung (2) eine Steckverbindung (2) umfasst.

## Revendications

1. Un raccord de tube universel, comprenant un premier connecteur (1), un deuxième connecteur (2), et un dispositif de connexion dans lequel on trouve un bossage annulaire (3) et un anneau de boucle (4) attaché au bossage annulaire (3); l'anneau de boucle (4) peut tourner sur son propre axe par rapport au bossage annulaire (3) ; le bossage annulaire (3) est en connexion fixe avec le deuxième connecteur (2); un premier angle d'ouverture (5) est formé entre l'axe médian du bossage annulaire (3) et l'axe médian du deuxième connecteur (2) ; l'anneau de boucle (4) est en connexion fixe avec le premier connecteur (1); et le deuxième angle d'ouverture (6) est formé entre l'axe médian de l'anneau de boucle (4) et l'axe médian du premier connecteur (1), dans lequel le bossage annulaire (3) comprend une bride annulaire (7), et l'anneau de boucle (4) comprend une pluralité de barbelures en arc (8) pour serrer la bride annulaire (7), dans laquelle les barbelures en arc sont distribuées de manière circonférentielle à une extrémité de l'anneau de boucle (4) à des intervalles caractérisés dans le fait que la paroi la plus externe du deuxième connecteur (2) comprend un rebord annulaire (11), le rebord annulaire (11) se trouve à proximité des barbelures en arc (8), et le diamètre externe du rebord (11) est légèrement plus grand que le (ou égal au) diamètre de l'anneau de boucle (4).

2. Le raccord de tube universel de la revendication 1, dans lequel le premier angle d'ouverture (5) est égal au deuxième angle d'ouverture (6).

3. Le raccord de tube universel de la revendication 1 ou 2, comprenant en outre une bague d'étanchéité (9), dans lequel une cannelure annulaire (10) est prévue sur le côté externe du bossage annulaire (3) afin de pouvoir recevoir la bague d'étanchéité (9).

4. Le raccord de tube universel de l'une des revendications précédentes, dans lequel le bossage annulaire (3) et le deuxième connecteur (2) sont intégralement formés, et l'anneau de boucle (4) et le premier connecteur (1) sont intégralement formés.

5. Le raccord de tube universel de l'une des revendications précédentes, dans lequel le premier angle d'ouverture (5) se situe entre 10 et 45 degrés, et le deuxième angle d'ouverture (6) se situe entre 10 et 45 degrés.

6. Le raccord de tube universel de l'une des revendications précédentes, dans lequel les barbelures en arc (8) sont au nombre de quatre et leur radian sont tous à 45° et sont distribués à équidistance à l'extrémité de l'anneau de boucle (4) dans le sens circonférentiel.

7. Le raccord de tube universel de l'une des revendications précédentes, dans lequel la paroi la plus externe de l'anneau de boucle (4) est munie d'une échelle graduée (12) pour indiquer l'angle de rotation du premier connecteur (1) ou du deuxième connecteur (2).

8. Le raccord de tube universel de l'une des revendications précédentes, dans lequel le premier connecteur est un connecteur de type prise et le deuxième connecteur (2) est un connecteur de type fiche (2).
